# EUROPEAN PATENT SPECIFICATION

(11) **EP 3 074 621 B1**
(45) Date of publication and mention of the grant of the patent: **05.08.2020**
(21) Application number: 14865398.3
(22) Date of filing: 14.11.2014
(51) Int. Cl.: F02F 7/00, F01L 1/02, F02B 67/04, F16F 15/30, F16M 1/026

(54) **COMBUSTION ENGINE WITH FLYWHEEL HOUSING**
VERBRENNUNGSMOTOR MIT SCHWUNGRADGEHÄUSE
MOTEUR À COMBUSTION À CARTER DE VOLANT

(30) Priority: 27.11.2013 SE 1351411
(43) Date of publication of application: 05.10.2016
(73) Proprietor: Scania CV AB, 151 87 Södertälje (SE)
(72) Inventor: FORS, Stefan, S-146 36 Tullinge (SE)
(74) Representative: Scania CV AB
(86) International application number: PCT/SE2014/051357
(87) International publication number: WO 2015/080651

(56) References cited:
- WO-A1-91/10049
- DE-A1- 4 128 432
- DE-U1- 8 813 614
- JP-A- H07 269 532
- JP-A- H11 229 888
- JP-A- 2003 120 316
- JP-U- H0 552 233
- JP-U- S60 149 838
- US-A- 2 879 758

## Description

### FIELD OF THE INVENTION AND PRIOR ART

The present invention relates to a combustion engine according to the preamble of claim 1.

Such an engine is known for example from DE41 28 432.

In a combustion engine of piston type, combustion occurs sequentially in the cylinders of the combustion engine, and the crank shaft of the combustion engine is therefore subjected to a pulse-like force of impact from the cylinder pistons. In order to avoid that this pulse-like force of impact results in a jerky rotation of the crank shaft, a flywheel may be rotatably arranged on the crank shaft. The flywheel rotates together with the crank shaft, and through its moment of inertia the flywheel will achieve an even rotation of the crank shaft. The flywheel is arranged on the outside of the engine block, at one end of the engine block, and is attached to the part of the crank shaft that protrudes from the engine block in a direction toward a gearbox connected to the combustion engine. The relevant end of the engine block is at least partly covered with a flywheel housing, comprising a compartment for receiving the flywheel. The flywheel housing is, as a rule, attached to said end of the engine block with the help of threaded attaching elements, which are screwed into threaded holes in the engine block. A clutch housing, which contains a clutch arranged between the combustion engine and the gearbox, is attached to the flywheel housing, and the clutch housing is in its turn attached to or constitutes part of the gearbox house of the gearbox. The flywheel housing thus constitutes a part of the connection between the engine block and the gearbox housing and will therefore absorb forces between these. Since these forces may be relatively great, the flywheel housing must be well attached to the engine block, and the forces in the attaching elements that keep the flywheel housing attached to the engine block should be reasonably evenly distributed, in order to avoid damage to the attaching elements and the flywheel housing. The attachment of the flywheel housing to the engine block may, however, be made more difficult by the cogwheel transmission which is often arranged at the relevant end of the engine block, for transmission of the torque from the crank shaft to one or several shafts driven by the crank shaft, wherein these driven shafts may e.g. comprise the combustion engine's camshaft and input shafts of an oil pump, a fuel pump and a brake compressor. The cogwheel transmission also comprises one or several driving cogwheels, which are rotatably arranged on the crank shaft, and a number of driven cogwheels, which are rotatably arranged on each side of said driven shafts. Each driven cogwheel is either arranged in direct engagement with the associated driving cogwheel on the crank shaft, or connected to this via one or several intermediate cogwheels comprised in the cogwheel transmission, so that each intermediate cogwheel is rotatably mounted on an intermediate wheel shaft, which is attached to the engine block at one end. The cogwheel transmission's cogwheels are arranged in a compartment between the engine block's end and the flywheel housing, and if the cogwheel transmission comprises many driven cogwheels and intermediate cogwheels, these may cover such a large part of the engine block's end section that it becomes difficult to find a suitable space for the threaded attaching elements, which are to keep the flywheel housing attached to the engine block.

### OBJECTIVE OF THE INVENTION

The objective of the present invention is to achieve a solution to the problem described above.

### SUMMARY OF THE INVENTION

According to the present invention, said objective is achieved with a combustion engine having the characteristics defined in claim 1.

The combustion engine according to the invention comprises:
- an engine block,
- a crank shaft which is rotatably mounted in the engine block and protrudes from the engine block at one end of the engine block,
- a flywheel housing which is attached to said end of the engine block with the help of threaded attaching elements, which are screwed into threaded holes in the engine block,
- a cogwheel transmission which is arranged at said end of the engine block for transmission of torque from the crank shaft to one or several shafts driven by the crank shaft, and which comprise at least one first intermediate cogwheel, which is rotatably mounted on a first intermediate wheel shaft, having a first end and an opposite end, so that the intermediate wheel shaft's first end is attached to the engine block.
One of the flywheel housing's attaching elements extends through an axial through-hole in said intermediate wheel shaft, and is screwed into a threaded hole arranged in the engine block in line with this through-hole.

According to the invention, an intermediate wheel shaft is thus used for receipt of one of the threaded attaching elements that keep the flywheel housing attached to the engine block, which means that also a surface of the engine block's end, which is covered by an intermediate cogwheel with the associated intermediate wheel shaft, may be used to mount said attaching elements. Thus, from the point of view of force distribution, improved possibilities of finding a suitable placement of the relevant attaching elements are created. Another advantage of this solution is that an intermediate wheel shaft receiving one of the relevant attaching elements will be suspended at both of its ends, i.e. on both sides of the intermediate cogwheel arranged on the intermediate wheel shaft, instead of having been suspended only at its end facing the engine block, as previously. This results in a stiffer and more stable suspension of the intermediate wheel shaft, and thus a stiffer and more stable support for the intermediate cogwheel stored thereupon.

According to one embodiment of the invention, the flywheel housing abuts against the second end of said intermediate wheel shaft. Thus, the intermediate wheel shaft becomes well attached between the engine block and the flywheel housing.

Other advantageous features of the combustion engine according to the invention are set out in the non-independent claims and the description below.

### BRIEF DESCRIPTION OF THE DRAWINGS

The invention is described below with the help of example embodiments, with reference to the enclosed drawings. Shown in:
- Fig. 1: is a perspective view of a combustion engine according to one embodiment of the present invention,
- Fig. 2: is a perspective view corresponding to Fig. 1, but with the combustion engine's flywheel removed,
- Fig. 3: is a perspective view corresponding to Fig. 1, but with the combustion engine's flywheel and flywheel housing removed, and
- Fig. 4: is a schematic longitudinal section through an intermediate wheel shaft of a combustion engine according to the present invention.

### DETAILED DESCRIPTION OF EMBODIMENTS ACCORDING TO THE INVENTION

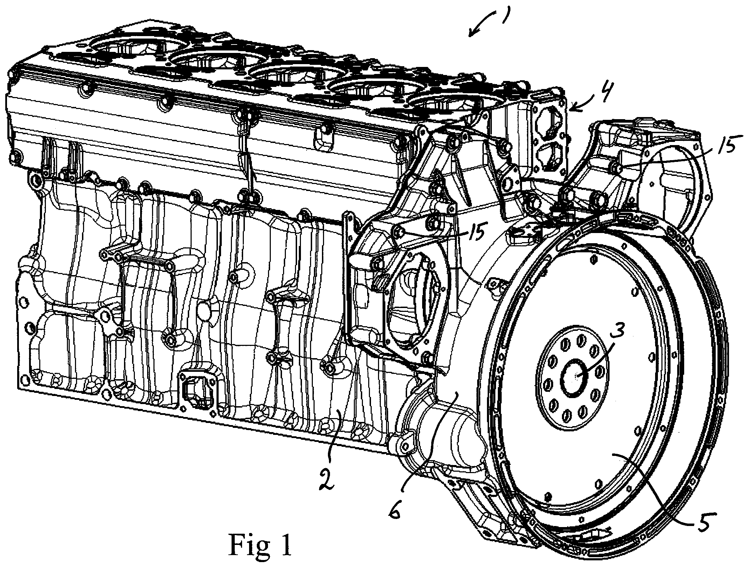

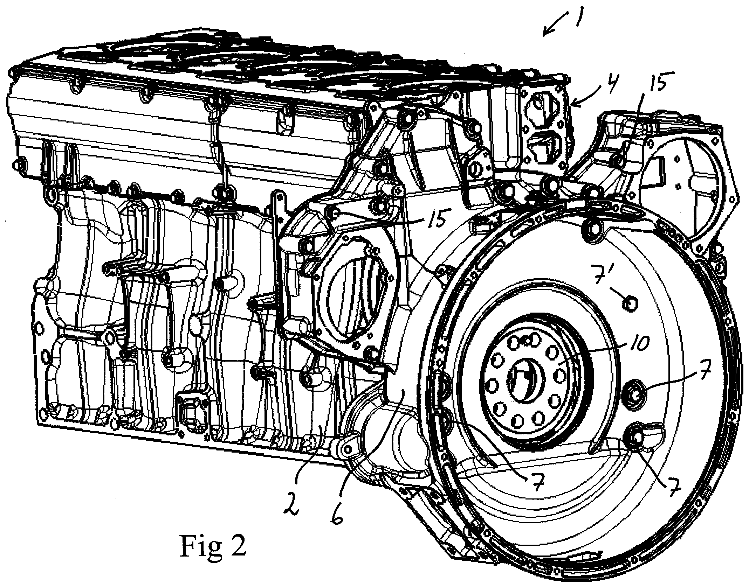

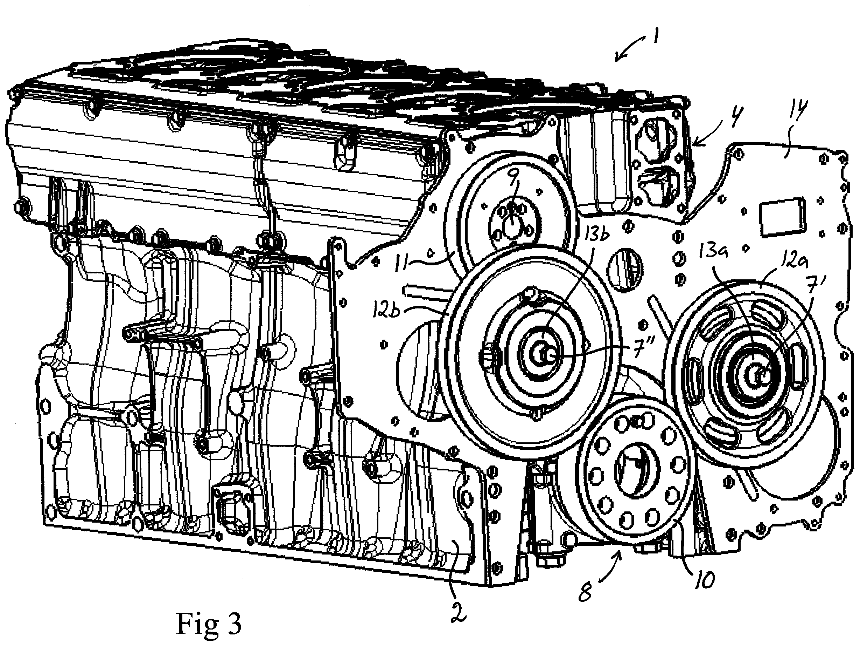

In Figs. 1-3, a combustion engine 1 according to one embodiment of the present invention is displayed. The combustion engine 1 is of piston type and comprises an engine block 2, in which a number of engine cylinders (not displayed) are arranged. A crank shaft 3 is rotatably mounted in the engine block 2 and protrudes from the engine block at one end 4 of the engine block. The crank shaft 3 is not drawn in Figs. 2 and 3, but its external end is displayed in Fig. 1. A flywheel 5 is rotatably arranged on the crank shaft 3 at its external end. The flywheel 5 is conventionally housed in a flywheel housing 6, which is attached to said end 4 of the engine block with the help of threaded attaching elements 7, 7', 7" which are screwed into threaded holes in the engine block 2.

A cogwheel transmission 8 (see Fig. 3) is arranged at said end 4 of the engine block for transmission of torque from the crank shaft 3 to one or several shafts 9 driven by the crank shaft. This cogwheel transmission 8 comprises at least one driving cogwheel 10, which is rotatably arranged on the crank shaft 3, and a driven cogwheel 11, which is rotatably arranged on each one of the driven shafts 9. The cogwheel transmission 8 also comprises one or several intermediate cogwheels 12a, 12b, so that each intermediate cogwheel 12a, 12b is arranged to transmit torque from a driving cogwheel 10 on the crank shaft 3 to one or several driven cogwheels 11. In the illustrated example, the cogwheel transmission 8 comprises a first intermediate cogwheel 12a and a second intermediate cogwheel 12b, which are in engagement with one and the same driving cogwheel 10 on the crank shaft 3. The first intermediate cogwheel 12a is rotatably stored on a first intermediate wheel shaft 13a, and the second intermediate cogwheel 12b is rotatably stored on a second intermediate wheel shaft 13b, so that these intermediate wheel shafts 13a, 13b are attached to the engine bock 2. In the illustrated combustion engine 1, the first intermediate cogwheel 12a is arranged to transmit torque to a driven cogwheel (not displayed), which is rotatably arranged on a driven shaft (not displayed) constituting an input shaft of a brake compressor, while the second intermediate cogwheel 12b, via another intermediate cogwheel (not displayed), which is rotatably arranged on the second intermediate wheel shaft 13b behind the second intermediate cogwheel 12b, is arranged to transmit torque to a driven cogwheel 11, which is rotatably arranged on a driven shaft 9 constituting the camshaft of the combustion engine.

In the illustrated embodiment the flywheel housing 6 is conventionally arranged to cover the intermediate cogwheels 12a, 12b and the other cogwheels 10, 11 of the cogwheel transmission 8, so that a support plate 14 (see Fig. 3) is arranged between the engine block's end 4 and the flywheel housing 6 to create a larger abutting surface for the flywheel housing. Said cogwheels 10, 11 and intermediate cogwheels 12a, 12b are thus arranged between the support plate 14 and the flywheel housing 6. The support plate 14 is attached to the engine block 2, e.g. with the help of a set of threaded attaching elements (not displayed), and the flywheel housing 6 is in turn attached to the support plate 14 with the help of another set of threaded attaching elements 15.

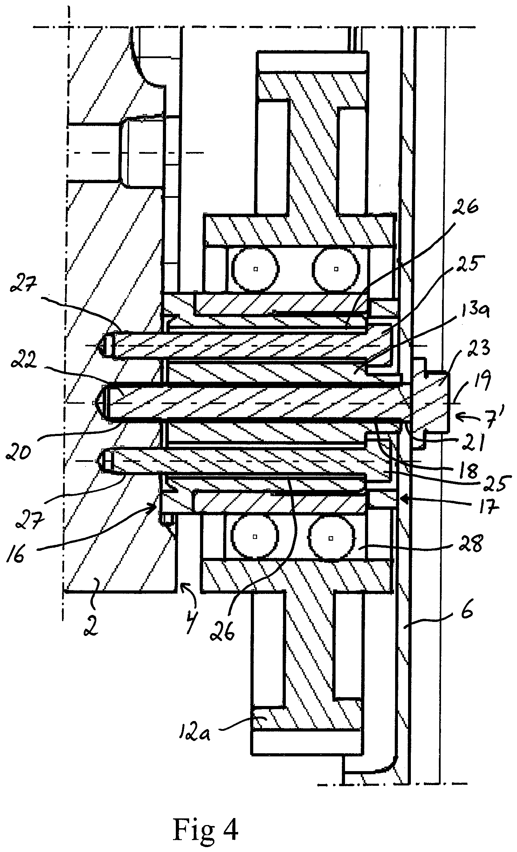

Fig. 4 shows a schematic longitudinal section through the first intermediate wheel shaft 13a. The first intermediate wheel shaft 13a has a first end 16, which is attached to the engine block 2 and via which the intermediate wheel shaft 13a abuts against the engine block's end 4, and an opposite second end 17, which faces the flywheel housing 6. In the illustrated example, the flywheel housing 6 abuts against the intermediate wheel shaft's second end 17. The intermediate wheel shaft 13a is equipped with a central through-hole 18, extending axially between the intermediate wheel shaft's first and second ends 16, 17 and being concentric with the intermediate shaft's longitudinal axis 19. A threaded hole 20 is arranged in the engine block 2 in line with the central through-hole 18 at the intermediate wheel shaft's first end 16, and a through-hole 21 is arranged in the flywheel housing 6 in line with the central through-hole 18 at the intermediate wheel shaft's second end 17. A threaded attaching element 7', which keeps the flywheel housing 6 attached to the engine block 2, extends through the through-hole 21 into the flywheel housing 6 and through the central through-hole 18 of the intermediate wheel shaft 13a, and is screwed into the threaded hole 20 in the engine block 2. The threaded attaching element 7' consists of a screw and has an elongated screw shaft 22 and a screw head 23 attached to the screw shaft. The screw shaft 22 extends through said through-holes 18, 21 and thus has a diameter which is smaller than the diameter of these through-holes. The screw shaft 22 is equipped with an external thread, which is in engagement with an internal thread in said threaded hole 20 in the engine block 2. The screw head 23 abuts against the flywheel housing 6 and has a diameter which is greater than the diameter of the through-hole 21 in the flywheel housing.

In the example illustrated in Fig. 4, the first intermediate wheel shaft 13a is attached to the engine block 2 with the help of a number of threaded attaching elements 25, each of which extends through an axial through-hole 26 of the intermediate wheel shaft 13a, and is screwed into a threaded hole 27 in the engine block 2. These through-holes 26 are parallel with the central through-hole 18 of the intermediate wheel shaft 13a and distributed around the same. The intermediate wheel shaft 13a could naturally also be attached to the engine block 2 in a manner different to the one illustrated here.

In the illustrated embodiment, another threaded attaching element 7" (see Fig. 3), which keeps the flywheel housing 6 attached to the engine block 2, is arranged to extend through a central through-hole of the second intermediate wheel shaft 13b in the same manner as in the first intermediate wheel shaft 13a, so that this threaded attaching element 7" is screwed into a threaded hole arranged in the engine block 2, in line with the central through-hole of the second intermediate wheel shaft 13b. The second intermediate wheel shaft 13b has, as does the first intermediate wheel shaft 13a, a first end that is attached to the engine block 2, and via which the second intermediate wheel shaft 13b abuts against the engine block's end 4, and an opposite second end which is facing the flywheel housing 6. The flywheel housing 6 is suitably arranged to abut against said second end of the second intermediate wheel shaft 13b. The second intermediate wheel shaft 13b may be attached to the engine block 2 with the help of threaded attaching elements in the manner described above and illustrated in Fig. 4, or in another suitable manner.

The intermediate cogwheels 12a, 12b are rotatably mounted on the associated intermediate wheel shaft 13a, 13b via a rolling bearing 28, e.g. in the form of a ball bearing, as illustrated in Fig. 4.

The flywheel housing 6 is suitably made of aluminium.

The combustion engine according to the invention is specifically intended to be used in a heavy goods vehicle, such as a bus, a tractor or a truck.

## Claims

1. Combustion engine comprising:
- an engine block (2),
- a crank shaft (3), which is rotatably mounted in the engine block (2) and protrudes from the engine block at one end (4) of the engine block,
- a flywheel housing (6) which is attached to said end (4) of the engine block with the help of threaded attaching elements (7, 7', 7") that are screwed into threaded holes in the engine block (2), and
- a cogwheel transmission (8) which is arranged at said end (4) of the engine block, for transmission of torque from the crank shaft (3) to one or several shafts (9) driven by the crank shaft, and which comprises at least one first intermediate cogwheel (12a), which is rotatably mounted on a first intermediate wheel shaft (13a), having a first end (16) and an opposite second end (17), so that the intermediate wheel shaft's first end (16) is attached to the engine block (2),
**characterised in that** one of said threaded attaching elements (7') extends through an axial through-hole (18) of said intermediate wheel shaft (13a) and is screwed into a threaded hole (20), which is arranged in the engine block (2) in line with such a through-hole (18).

2. Combustion engine according to claim 1, **characterised in that** the flywheel housing (6) abuts against the second end (17) of said intermediate wheel shaft (13a).

3. Combustion engine according to claim 1 or 2, **characterised in that** said through-hole (18) is concentric with the longitudinal shaft (19) of said intermediate wheel shaft (13a).

4. Combustion engine according to any of claims 1-3, **characterised in that**:
- said cogwheel transmission (8) also comprises a second intermediate cogwheel (12b), which is rotatably mounted on a second intermediate wheel shaft (13b), having a first end and an opposite second end, so that the second intermediate wheel shaft's first end is attached to the engine block (2), and
- another of said threaded attaching elements (7") extends through an axial through-hole of the second intermediate shaft (13b) and is screwed into a threaded hole which is arranged in the engine block (2) in line with this through-hole.

5. Combustion engine according to claim 4, **characterised in that** the flywheel housing (6) abuts against the second intermediate wheel shaft's second end.

6. Combustion engine according to claim 4 or 5, **characterised in that** said through-hole of the second intermediate shaft (13b) is concentric with the longitudinal axis of the second intermediate wheel shaft (13b).

## Patentansprüche

1. Verbrennungsmotor, mit:
- einem Motorblock (2),
- einer Kurbelwelle (3), die drehbar in dem Motorblock (2) montiert ist und an einem Ende (4) des Motorblocks aus dem Motorblock hervorsteht,
- einem Schwungradgehäuse (6), das an dem genannten Ende (4) des Motorblocks mit der Hilfe von mit einem Gewinde versehenen Befestigungselementen (7, 7', 7") angebracht ist, welche in Gewindebohrungen in dem Motorblock (2) geschraubt sind, und
- einem Kammradgetriebe (8), das an dem genannten Ende (4) des Motorblocks angeordnet ist zur Übertragung von Drehmoment von der Kurbelwelle (3) auf eine oder mehrere von der Kurbelwelle angetriebene Wellen (9) und das wenigstens ein Zwischenkammrad (12a) aufweist, das drehbar auf einer ersten Zwischenradwelle (13a) montiert ist, die ein erstes Ende (16) und ein entgegengesetztes zweites Ende (17) hat, sodass das erste Ende (16) der Zwischenradwelle an dem Motorblock (2) angebracht ist,
**dadurch gekennzeichnet, dass** eines der mit einem Gewinde versehenen Befestigungselemente (7') sich durch eine axiale Durchgangsbohrung (18) der Zwischenradwelle (13a) erstreckt und in eine Gewindebohrung (20) geschraubt ist, die in dem Motorblock (2) in Verlängerung einer solchen Durchgangsbohrung (18) angeordnet ist.

2. Verbrennungsmotor nach Anspruch 1,
**dadurch gekennzeichnet, dass** das Schwungradgehäuse (6) an dem zweiten Ende (17) der Zwischenradwelle (13a) anliegt.

3. Verbrennungsmotor nach Anspruch 1 oder 2,
**dadurch gekennzeichnet, dass** die Durchgangsbohrung (18) konzentrisch zu der Längsachse (19) der Zwischenradwelle (13a) ist.

4. Verbrennungsmotor nach einem der Ansprüche 1 bis 3,
**dadurch gekennzeichnet, dass**:
- das Kammradgetriebe (8) ferner ein zweites Zwischenkammrad (12b) aufweist, das drehbar auf einer zweiten Zwischenradwelle (13b) montiert ist, die ein erstes Ende und ein entgegengesetztes zweites Ende hat, sodass das erste Ende der zweiten Zwischenradwelle an dem Motorblock (2) angebracht ist, und
- ein weiteres der mit einem Gewinde versehenen Befestigungselemente (7") sich durch eine axiale Durchgangsbohrung der zweiten Zwischenradwelle (13b) erstreckt und in eine Gewindebohrung geschraubt ist, die in dem Motorblock (2) in Verlängerung dieser Gewindebohrung angeordnet ist.

5. Verbrennungsmotor nach Anspruch 4,
**dadurch gekennzeichnet, dass** das Schwungradgehäuse (6) an dem zweiten Ende der zweiten Zwischenradwelle anliegt.

6. Verbrennungsmotor nach Anspruch 4 oder 5,
**dadurch gekennzeichnet, dass** die Durchgangsbohrung der zweiten Zwischenradwelle (13b) konzentrisch zu der Längsachse der zweiten Zwischenradwelle (13b) ist.

## Revendications

1. Moteur à combustion comprenant :
- un bloc moteur (2),
- un arbre de vilebrequin (3), qui est monté de manière rotative dans le bloc moteur (2) et dépasse du bloc moteur à une extrémité (4) du bloc moteur,
- un carter de volant (6) qui est fixé à ladite extrémité (4) du bloc moteur à l'aide d'éléments de fixation filetés (7, 7', 7") qui sont vissés dans des trous filetés dans le bloc moteur (2), et
- une transmission à crémaillère (8) qui est agencée sur ladite extrémité (4) du bloc moteur, pour une transmission du couple à partir de l'arbre de vilebrequin (3) à un ou plusieurs arbres (9) entraînés par l'arbre de vilebrequin, et qui comprend au moins un premier pignon intermédiaire (12a), qui est monté de manière rotative sur un premier arbre de roue intermédiaire (13a), ayant une première extrémité (16) et une deuxième extrémité à l'opposé (17), de sorte que la première extrémité (16) de l'arbre de roue intermédiaire est fixé au bloc moteur (2),
**caractérisé en ce que** l'un desdits éléments de fixation filetés (7') s'étend à travers un trou axial traversant (18) dudit arbre de roue intermédiaire (13a) et est vissé dans un trou fileté (20), qui est agencé dans le bloc moteur (2) en ligne avec un tel trou traversant (18).

2. Moteur à combustion selon la revendication 1, **caractérisé en ce que** le carter de volant (6) bute contre la deuxième extrémité (17) dudit arbre de roue intermédiaire (13a).

3. Moteur à combustion selon la revendication 1 ou 2, **caractérisé en ce que** ledit trou traversant (18) est concentrique avec l'arbre longitudinal (19) dudit arbre de roue intermédiaire (13a) .

4. Moteur à combustion selon l'une quelconque des revendications 1-3, **caractérisé en ce que** :
- ladite transmission à crémaillère (8) comprend également un deuxième pignon intermédiaire (12b), qui est monté de manière rotative sur une deuxième arbre de roue intermédiaire (13b), ayant une première extrémité et une deuxième extrémité à l'opposé, de sorte que la première extrémité du deuxième arbre de roue intermédiaire est fixée au bloc moteur (2), et
- un autre desdits éléments de fixation filetés (7") s'étend à travers un trou traversant du deuxième arbre intermédiaire (13b) et est vissé dans un trou fileté qui est agencé dans le bloc moteur (2) en ligne avec ce trou traversant.

5. Moteur à combustion selon la revendication 4, **caractérisé en ce que** le carter de volant (6) bute contre la deuxième extrémité du deuxième arbre de roue intermédiaire.

6. Moteur à combustion selon la revendication 4 ou 5, **caractérisé en ce que** ledit trou traversant du deuxième arbre intermédiaire (13b) est concentrique avec l'axe longitudinal du deuxième arbre de roue intermédiaire (13b).
